Europäisches Patentamt

**European Patent Office**

Office européen des brevets

(11) Publication number: **0 058 961**
**A1**

(12) # EUROPEAN PATENT APPLICATION

(21) Application number: **82101288.7**

(22) Date of filing: **19.02.82**

(51) Int. Cl.³: **H 01 H 31/00, G 01 R 31/32**

(30) Priority: **20.02.81 JP 22234/81 U**

(43) Date of publication of application: **01.09.82**
**Bulletin 82/35**

(84) Designated Contracting States: **CH DE LI**

(71) Applicant: **Hitachi, Ltd., 5-1, Marunouchi 1-chome, Chiyoda-ku Tokyo 100 (JP)**

(72) Inventor: **Seietsu, Daibo, 46-7, Nishinarusawacho-4-chome, Hitachi-shi (JP)**
Inventor: **Satoshi, Miwada, 1519-13, Shirakata Tokaimura, Naka-gun Ibaraki-ken (JP)**
Inventor: **Kazuaki, Oishi, 18-21, Moriyamacho-1-chome, Hitachi-shi (JP)**

(74) Representative: **Finck, Dieter et al, K.L. Schiff Dr. A. v. Funer Dipl.-Ing P. Strehl Dr. U. Schübel-Hopf Dipl.-Ing. D. Ebbinghaus Dr. Ing. D. Finck Patentanwälte Mariahilfplatz 2 & 3, D-8000 München 90 (DE)**

(54) **Gas-insulated electric equipment with earthing switch.**

(57) A gas-insulated electric equipment such as a gas-insulated switch gear or gas insulated substation equipment, and more specifically an improvement in an earthing switch (500) built in a gas-insulated electric equipment. The earthing switch is provided with insulated guiding devices (52, 53, 54) which function selectively to electrically connect the electric contacts (211, 212) in the earthing switch (500) to an external device outside of the enclosure (501, 502) thereof in an isolated relation of the contacts from the enclosure while the enclosure is maintained gas-tight therein. When the earthing switch is turned on, that is, when the electric contact (511, 512) in the earthing switch is brought into contact with a mating contact (211, 212) on a conductor (201, 202), an insulation testing device provided with a test voltage source (70) can be connected to an end portion (541) of said insulated guiding device (52, 53, 54) outside of the enclosure. In this way, the conductor associated with the contact is tested with respect to its insulation.

## GAS-INSULATED ELECTRIC EQUIPMENT WITH EARTHING SWITCH

The present invention generally relates to a gas-insulated electric equipment such as a gas-insulated switch gear or gas-insulated substation equipment, and more specifically concerns an improvement in an earthing switch built in a gas-insulated electric equipment.

In this type of gas-insulated electric equipment, for example, alive portions (through which currents are flowing) are hermetically disposed in a grounded metal enclosure in an isolated relation therefrom. The enclosure in turn is filled therein with an insulating fluid such as sulfur hexafluoride ($SF_6$) gas. The electric equipment with the above arrangement has such an advantage that the equipment can be made compact in size, thereby requiring a small space for its installation. Further, since the alive portions are not exposed to the air, there does not occur such a danger that an operator is struck by electricity when he touches the alive portion by accident during maintenance or inspection, which results in that the equipment is weatherproofed and high of reliability. For general knowledge or information on the gas insulated electric equipment, refer, for example, to U.S. Patent No. 4,032,820 issued June 28, 1977, entitled "Horizontal Double Plane High Voltage Switching Assembly".

In order to check the gas-insulated electric

0058961

equipment for the completeness of its insulation, it is necessary to conduct an insulation test between the alive portions and the grounded metal enclosure, immediately or optionally after the equipment has been assembled. In this case, since the enclosure is gas-tight sealed, it becomes very difficult to carry out the insulation test. More specifically, upon the insulation test, a test voltage must be applied between a conductor to be tested and the enclosure. However, the conductor is disposed in the enclosure and the enclosure is hermetically sealed after the gas insulated equipment has been assembled, which makes it impossible to apply the test voltage to the conductor. Under these circumstances, if the insulation test were carried out, the enclosure would be formed with an opening in place, a special test bushing would be inserted in said opening, and then the conductor under test would be pulled out of the enclosure through the bushing. Since this test imaginary method requires that the enclosure should be formed with an opening, however, the insulating gas will inevitably flow out of the enclosure upon formation of the opening, involving such additional processing steps as the gas re-filling operation and the subsequent enclosure resealing operation. A gas-insulated electric equipment according to the present invention is intended to control or handle an extra-high voltage (for example, 60 to 70 KV) and an extra-large wattage (for example, 100 KVA), therefore, the equipment will become large in size and correspondingly the above-mentioned operations after test will take a long period of time and a lot of labour. Thus, this test imaginary method is not practical.

Accordingly, an object of the present invention is to provide a gas-insulated electric equipment, in particular, an improved earthing switch built therein which allows its easy insulation test for conductors.

Another object of the present invention is to provide an earthing switch which is provided with means for connecting an electric contact within the earthing switch to an external terminal outside of the casing of the switch in an isolated relation of the contact from the casing, whereby said means can be used as a test conductor upon test voltage application. A related object of the present invention is to provide a gas-insulated electric equipment which eliminates the necessity to add any special test-voltage application device other than the above-mentioned earthing switch, which leads to its simplified arrangement.

The gas-insulated equipment includes a disconnecting switch for electrically disconnecting the gas-insulated equipment from line, and an earthing switch for selectively grounding the enclosure thereof for grounding a desired portion of the equipment for operator's safety during an inspection thereof, in addition to a circuit breaker, a transformer, a bus bar device and so on. According to the present invention, the earthing switch is provided with an insulated guiding device which functions to electrically connect the electric contact in the

- 4 -

0058961

earthing switch to an external terminal outside of the enclosure thereof in an isolated relation of the guiding device from the enclosure while the enclosure is maintained gas-tight therein. When the earthing switch is turned on, that is, when the electric contact in the earthing switch is brought into contact with a counter contact on a conductor; the above-mentioned insulation test voltage can be applied to the terminal portion of said insulated guiding device outside of the enclosure. In this way, the conductor associated with the contact can be tested with respect to its insulation. For a normal operation of the earthing switch other than the insulation test, the terminal portion of the insulated guiding device outside of the enclosure is electrically connected to the enclosure thereof. Since the test voltage is applied to the insulated guiding device at the time of the insulation test, an insulation resistance between the terminal portion of the guiding device and the enclosure of the earthing switch must be high enough to withstand the insulation test voltage.

As compared with the earthing switch of the present invention, a prior art earthing switch is used merely to ground a desired portion of the equipment to the enclosure thereof for the purpose of operator's safety. Therefore, the prior art earthing switch is hermetically sealed in the enclosure, without any insulated guiding devices. The detailed structure of such a prior art is taught, for example, in U.S. Patent No. 3,806,682, issued April 23, 1974, entitled "High-Voltage Gas-Insulated Switch Gear with Capacitive Voltage Divider for Indicating Contact Position".

The above and other objects and advantages of the present invention will become clear from the following description with reference to the accompanying drawings, in which:

Fig. 1 is a schematic side view of major part of a gas-insulated electric equipment in accordance with an embodiment of the present invention;

Fig. 2 is a circuit diagram of the arrangement shown in Fig. 1, which is also illustrated in connection with its practical configuration in Fig. 1 for better understanding of the arrangement;

Fig. 3 is a detailed structure, partly in cross-section, of an earthing switch and associated portions in Fig. 1, when the gas-insulated electric equipment is under an insulation test; and

Fig. 4 is a detailed structure, in cross-section, of the earthing switch and an associated disconnecting switch in Fig. 1 when the gas-insulated electric equipment is energized.

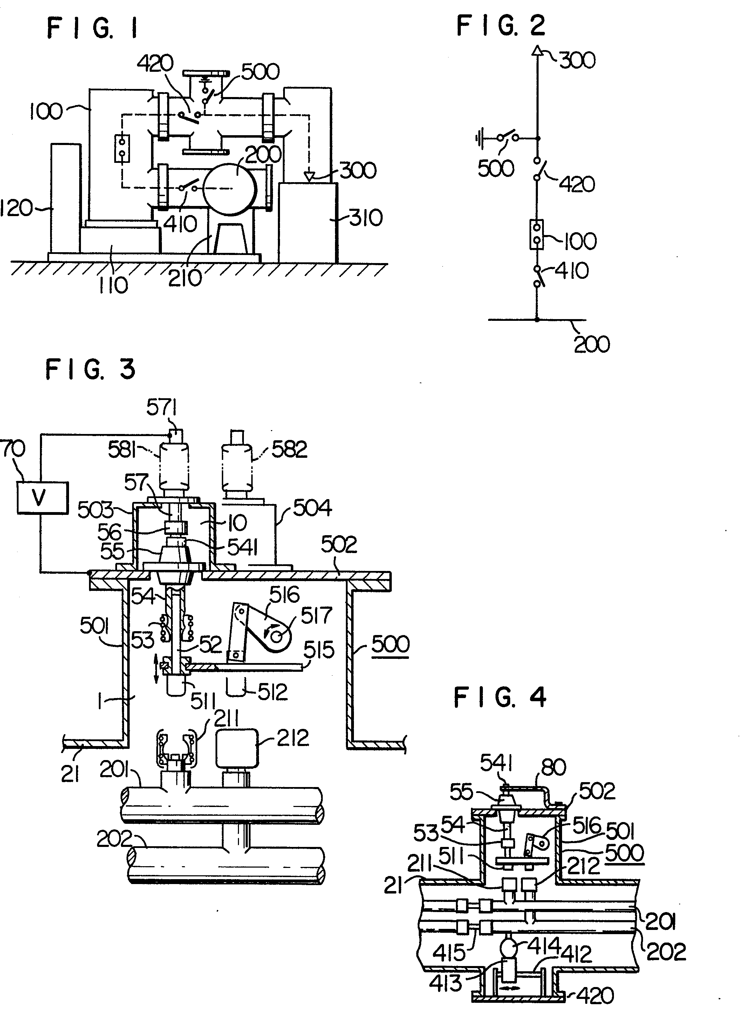

Turning now to Figs. 1 to 2, there is shown a gas-insulated electric equipment in accordance with an embodiment of the present invention, which comprises a gas-insulated circuit breaker 100, a bus bars device 200, lines extending from one terminal of the circuit breaker 100 through a first disconnecting switch 410 to the bus bars device 200, and lines extending from the other terminal of the circuit breaker 100 through a second disconnecting switch 420 to a load-side terminal 300. It further includes an earthing switch 500 which selectively connects or disconnects the line between the switch 420 and the terminal 300 to or from a metal casing or enclosure, said enclosure in turn is connected to earth. The load-side terminal 300 is connected to another bus bars device (not shown) within an enclosure 310. In Fig. 1, mechanisms and control sections of the circuit breaker 100 are enclosed respectively by casings 110 and 120, and the bus bars device 200 are carried or supported by a supporting base 210. The gas-insulated electric equipment of the present invention is used to control the connection and disconnection between the bus bars device 200 and another bus bars device located within the casing 310.

Now, explanation will be directed to the structure and operation of the earthing switch of this embodiment with reference to Fig. 3. In the figure, conductors 201 and 202 (that is, the line extending from the circuit breaker 100 to the load-side terminal 300 in Fig. 1) are housed in an enclosure 21 which in turn is filled with a sulfur hexafluoride ($SF_6$) gas. The present embodiment is intended for three-phase lines and thus the remaining conductor other than the conductors 201 and 202 is in the back of the conductor 201 although it is not illustrated in Figs. 3 and 4.

The conductors 201 and 202 are respectively provided with a fixed or stationary contacts 211 and 212. The earthing switch further includes movable contacts 511 and 512, each of which is separably connected with the fixed contacts 211 and 212, correspondingly and respectively; a supporting member 515 on which the movable contacts are carried as electrically isolated from each other; a linking mechanism 516 through which an external manual operation is transmitted to said supporter 515 in order to allow the supporter to move toward or away from said conductors; extensions 52 electrically connected to the respective movable contacts 511 and 512 and projecting from the respective movable contacts in the direction opposite to the conductors 201 and 202; collectors 53 each in electric contact with the related extension at all times under the force of a suitable device such as spring; side wall 501 and a top cover 502 forming an enclosure which contains said components set forth above; busings 55 each passing through the top cover 502; and central conductors 54 each passing through the related bushing to electrically connect the collector to an external portion outside of the enclosure, said each conductor 54 is provided with a hole which receives the mating extension member when the movable contacts are separated from the mating fixed contacts (the top cover, bushings and central conductors are gas-tight sealed in an auxiliary casing 503 or 504).

When the earthing switch is utilized in the insulation test, there are attached to the earthing switch, further, central conductors 57 each electrically connected through a connector 56 to the central conductor 54; external bushings 581 and 582 each through which an external central conductor 57 hermetically passes; and the auxiliary casings 503 and 504 each which are hermetically joined to the lower portion of the external bushing 581 or 582 and to the top cover 502 and which contain therein the top portions of the bushing 55 and central conductor 54, the connector 56 and bottom portion of the external central conductor 57. The auxiliary casing 503 is hermetically filled with an $SF_6$ gas. On the other hand, the material and configuration (in particular, the distance of side face) of the bushing 55 and external bushing 581 must be selected so as to satisfactorily withstand the insulation test voltage. It will be readily understood that the above-mentioned arrangement has been detailed in connection with the stationary contact 211, but the same arrangement and explanation can be applied to other stationary contacts (for example, contact 212). Fig. 3 illustrates the schematic arrangement associated with the stationary contact 212, only with the movable contact 512, auxiliary casing 504 and external bushing 582.

With the arrangement as disclosed above, the insulation test on the conductors 201 and 202 will be carried out as follows. First, an insulation test voltage of a test voltage source 70 (including measuring units) is applied between the enclosure (that is, earth level) and a top portion 571 of the external conductor 57, as shown in Fig. 3. Next, a shaft 517 of the link mechanism 516 is rotated by means of an appropriate driving device (not shown) externally of the earthing switch 500 so that the supporting member 515 moves upward or downward, whereby the movable contact 511 is brought into electric contact or connection with the mating stationary contact 211. The fixed contact, for example, comprises resilient metal pieces such as leaf springs and when engaged with or brought into contact with the movable contact, it can resiliently receive the movable contact so as to come into electrically satisfactory contact therewith. When the contact 511 is brought into contact with the contact 211, in this way, the conductor 201 will be electrically connected to the insulation testing device provided with the test voltage source 70 via the fixed contact 211, movable contact 511, extension 52, collector 53, central conductor 54, connector 56 and external conductor 57. At this point, the insulation test about the conductor 201 can be conducted. The same holds true for other stationary contacts including the contact 212.

Next, explanation will be made in detail about the operation when the earthing switch is actuated for its normal purpose, i.e., for the purpose of not the insulation test but normal operation, in connection with Fig. 4. For the normal operation of the earthing switch 500, the top portion 571 of the conductor 57 may be grounded when the switch 500 of Fig. 3 is used. In this embodiment, however, explanation will be made in the case where the switch 500 of Fig. 4 is actuated, with the auxiliary casing 503, external bushing 581, external conductor 57 and link 56 in Fig. 3 removed. Fig. 4 is substantially the same in configuration as Fig. 3 under the insulation test, except that Fig. 4 includes an additional shorting member 80 which serves to short between a head portion 541 of the central conductor 54 and the top cover 502. In the event that it is desired to ground such a conductor as 201 for the purpose of inspection or repair of the gas insulated electric equipment, the movable and fixed contacts in question can be brought into contact with each other by actuating the link mechanism 516, in the similar manner to in the above embodiment. In the embodiment of the present invention, in this way, the conductor insulation test can be carried out without the necessity for any structural modification in the earthing switch and therefore in the gas-insulated electric equipment. More particularly, the insulation test can be effected simply by mounting the additional auxiliary casing, and then by filling the additional casing with an insulating gas therein, without any necessity to release the gas already filled in the enclosure of the gas-insulated electric equipment. In this way, the gas-insulated electric equipment according to the present embodiment can allow insulation tests and further be simple in arrangement.

The schematic configuration of the disconnecting switch 420 is shown partly in Fig. 4. The disconnecting switch is selectively turned on or off in the following manner. A slider 413 is moved along a guiding member 412 in the arrow directions in Fig. 4 through an external manipulation from an external mechanism (not shown), because the slider 413 is slidably mounted on the guiding device 412. This will cause a movable contact 415 to be separated from the associated stationary contact to thereby disconnect the conductor 202 from the bus bars device 200, because the contact 415 is mechanically interlinked with the sliding member 413 via a linkage member 414.

The present embodiment has an advantage that the insulation test can be carried out with addition of the earthing switch 500 having a minor and simple arrangement to the gas-insulated electric equipment. In addition, since the earthing switch is capable of grounding a plurality of conductors with a single manual operation, this will allow the plurality of conductors to be tested at the same time in this embodiment, whereby the number of test steps can be decreased and the necessary test time can be minimized.

The present invention has been explained with reference to the preferred embodiment shown in the drawings, it should be understood that the invention is not limited to the embodiment but covers all other

- 12 -    0058961

possible modifications, alternatives and equivalent arrangements included in the scope of the appended claims. For example, firstly, the earthing switch according to the present invention can be applied not only to a particular gas insulated electric equipment but also to a wide varieties of gas-insulated apparatuses. Secondly, respective mechanisms and members of the earthing switch can be modified in various manners, so long as the conductors in the additional casing are isolated from the casing and the conductors are guided outside of the casing while the casing is maintained gas-tight. Thirdly, when the insulation material of the additional auxiliary casing is selected, it is unnecessary to take into consideration a surge voltage resulting, for example, from thunder. Therefore, any material capable of withstanding the insulation test voltage can be used. Finally, the above embodiment has been disclosed in the case of the plural conductors (201 to 203) and a corresponding number of externally guiding devices. When a simultaneous test of the plural conductors is desirable, however, the plural conductor guiding devices can be shorted to one another within the enclosure of the earthing switch and the additional auxiliary casing and the shorted devices are connected to a common terminal mounted externally of the casing or enclosure.

WHAT IS CLAIMED IS:

1.    A gas-insulated electric equipment comprising a conductive enclosure (501, 502) filled therein with an insulating fluid, a conductor (201, 202) housed in said conductive enclosure and isolated therefrom, and an earthing switch (500) housed in the enclosure for electrically connecting and disconnecting between said conductors and the enclosure, wherein said earthing switch has externally-guiding conductive means (52, 53, 54) which extend from at least one contact (511, 512) of the earthing switch in the enclosure, pass through the enclosure in an isolated relation therefrom, and project outside of the enclosure.

2.    A gas-insulated electric equipment as set forth in claim 1 wherein end portion (541) of said externally-guiding conductive means (52, 53, 54) that expose outside of said enclosure, is electrically connected to an insulation testing device provided with a test voltage source (70) in the case of an insulation test between said conductor (201, 202) and the enclosure, whereas said end portion is connected to the enclosure in the cases other than said insulation test.

3.    A gas-insulated electric equipment as set forth in claim 2 wherein said end portion (541) of said externally-guiding conductive means (52, 53, 54) are electrically connected to said insulation test voltage source (70) via at least one conductive extension (56, 57) said extension is provided along a part of its lengthwise portion with a bushing (581, 582), said bushing passes through an auxiliary casing (503, 504) which contains the each said end portion of the externally guiding conductive means and the portion of said extension extending from the end portion to the bushing.

4.     A gas-insulated electric equipment as set forth in claim 3 wherein said auxiliary casing (503, 504) is filled with an insulating gas.

5.     A gas-insulated electric equipment as set forth in either one of claims 1 to 4 wherein said earthing switch (500) includes at least one first contact member (211, 212) electrically connected to said conductor (201, 202), at least one second contact member (511, 512) capable of being separated from or being come into contact with said first contact, and mechanical means (515, 516, 517) for providing a relative movement to said first and second contacts so as to move said contacts towards and away from each other, said second contact being electrically connected to respective said externally-guiding conductive means (52, 53, 54).

6.     A gas-insulated electric equipment as set forth in claim 5 wherein said first contact (211, 212) is stationary contact and said second contact (511, 512) is movable contact, and wherein said externally-guiding conductive means (52, 53, 54) has means (52, 53, 54) which can expand and contract according to the movement of said movable contact maintaining the position of said end portion (541) of the externally-guiding conductive means (52, 53, 54).

7.        A gas-insulated electric equipment as set
forth in claim 5, wherein said first and second contact
members are each provided plurally, and said second
contact members are connected with said mechanical means
respectively, and said second contact members are
capable of being separated from or being come into
contact with the corresponding first contact members
simultaneously.

0058961

FIG. 1

FIG. 2

FIG. 3

FIG. 4

## DOCUMENTS CONSIDERED TO BE RELEVANT

| Category | Citation of document with indication, where appropriate, of relevant passages | Relevant to claim |
|---|---|---|
| X | US - A - 3 876 846 (H.W. GRAYBILL)<br><br>* figure 1; abstract * | 1-7 |
| X | DE - A - 2 108 775 (N.V. COQ)<br><br>* figures 1,2; page 3, lines 10-14 * | 1-7 |
| X | FR - A - 2 365 227 (MERLIN GERIN)<br><br>* figures 1,2; page 2, lines 13-23; claims 8,9 * | 1-7 |

**CLASSIFICATION OF THE APPLICATION (Int. Cl. 3)**

H 01 H 31/00
G 01 R 31/32

**TECHNICAL FIELDS SEARCHED (Int.Cl.3)**

H 01 H
H 02 B
G 01 R

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on. or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 28-05-1982 | KOLBE |